# EUROPÄISCHE PATENTANMELDUNG

(11) **EP 1 870 259 A1**
(43) Veröffentlichungstag der Anmeldung: **26.12.2007**
(21) Anmeldenummer: 07106681.5
(22) Anmeldetag: 23.04.2007
(51) Int. Cl.: B60C 11/18

(54) **Laufstreifen mit versteiften Profilelementen für einen Fahrzeugreifen**

(30) Priorität: 22.06.2006 DE 102006028616
(71) Anmelder: Continental Aktiengesellschaft, 30165 Hannover (DE)
(72) Erfinder: Neumann, Axel, 31559 Hohnhorst (DE); Komischke, Ralf, 31275 Lehrte (DE)

(57) **Zusammenfassung**

Laufstreifen für einen Fahrzeugreifen, welcher in Profilblöcke (3) und/oder Profilbänder untergliedert ist, wobei der Laufstreifen Einkerbungen aufweist, die mit einem Material verfüllt sind, das von der Laufstreifenkautschukmischung unterschiedliche Eigenschaften aufweist. Die Erfindung besteht darin, dass das von der Laufstreifenkautschukmischung unterschiedliche Eigenschaften aufweisende Material eine Festigkeitsträger (8) enthaltende Lage (7) ist, wobei die Festigkeitsträgerlage (7) aus parallel zueinander angeordneten gummierten Korden oder Garnen as Festigkeitsträger (8) besteht, dass die Festigkeitsträger (8) einen höheren Modul als die Laufstreifenkautschukmischung aufweisen und derart im Laufstreifen angeordnet sind, dass die Profilklotz (3)- und/oder die Profilbandsteifigkeit definiert erhöhbar ist. Es wird eine Entkopplung der Laufstreifengummimischungshärte von der Profilblock-bandsteifigkeit erreicht.

## Beschreibung

Die Erfindung betrifft einen aus einer Kautschukmischung bestehenden Laufstreifen für einen Fahrzeugreifen und einen Fahrzeugreifen, der diesen Laufstreifen enthält, wobei der Laufstreifen durch Längs- und/oder Querrillen in Profilblöcke und/oder Profilbänder untergliedert ist, wobei der Laufstreifen Einkerbungen aufweist, die mit einem solchen Material verfüllt und fest geschlossen sind, das von der Laufstreifenkautschukmischung unterschiedliche Eigenschaften aufweist.

Ein Fahrzeugreifen mit einem derartigen Laufstreifen, insbesondere dessen Herstellungsverfahren ist in der noch nicht veröffentlichten DE 10 2005 061 092 beschrieben. Bei der Herstellung eines Fahrzeugreifens wird u.a. als Bauteil der so genannte Laufstreifen vorgefertigt, welcher zusammen mit weiteren Bauteilen des Fahrzeugreifens zu einem Reifenrohling vereinigt und anschließend in einer Vulkanisationsform vulkanisiert wird, während dessen der Laufstreifen sein Laufstreifenprofil, bestehend aus durch Längs- und Querrillen untergliederte Profilblöcke und/oder Profilbänder erhält. Der Laufstreifen kann aus einer einzigen Kautschukmischung bestehen, oder aber auch aus mehreren Kautschukmischungen zusammengesetzt sein, insbesondere kann er eine so genannte "Cap" und eine so genannte "Base" aufweisen.

Der gattungsgemäße Laufstreifen der DE 10 2005 061 092 wird derart hergestellt, dass dieser noch grüne, unvulkanisierte Laufstreifen direkt nach dem Extrudieren bzw. Kalandrieren mit Einkerbungen versehen wird und dass nach dem Einbringen der Einkerbungen in diese ein von der Kautschukmischung des Laufstreifens abweichende Eigenschaften aufweisendes Material eingebracht wird. Der Laufstreifen des fertig aufgebauten und vulkanisierten Reifens zeichnet sich dadurch aus, das der Laufstreifen auf seiner dem Straßenbelag zugewandten Seite Ausstriche von in Einkerbungen eingebrachten Materiales aufweist.

Es wurde bisher zwar die Möglichkeit des Einbringens eines weiteren Materials, insbesondere ein einfaches und kostengünstiges Verfahren hierzu offenbart. Jedoch sind keine Hinweise auf eine konkrete, verbesserte Ausführung eines Laufstreifens zur Erreichung verbesserter Fahreigenschaften des Fahrzeugreifens entnehmbar.

Es ist die Aufgabe der vorliegenden Erfindung einen Laufstreifen und einen Fahrzeugreifen mit einem solchen Laufstreifen bereitzustellen, der einfach aufgebaut und kostengünstig reproduzierbar zu fertigen ist und der die Handlingeigenschaften des Reifens auf einfache Art und Weise verbessert.

Die Aufgabe wird überraschend auf einfache Art und Weise dadurch gelöst, dass das von der Laufstreifenkautschukmischung unterschiedliche Eigenschaften aufweisende Material eine Festigkeitsträger enthaltende Lage ist, wobei die Festigkeitsträgerlage aus parallel zueinander angeordneten gummierten Korden oder Garnen als Festigkeitsträger besteht, dass die Festigkeitsträger einen höheren Modul als die Laufstreifenkautschukmischung aufweisen und derart im Laufstreifen angeordnet sind, dass die Profilblock- und/oder die Profilbandsteifigkeit in definierter Richtung und gerichtet erhöhbar ist.

Es wird ein Laufstreifen erhalten, der durch den Einsatz von Festigkeitsträgerlagen in bestimmten Raumrichtung gezielt versteift ist. Die Festigkeitsträgerlagen bestehen aus parallel zueinander angeordneten Festigkeitsträgern, die Garne oder Korde sind. Durch eine gerichtete Anordnung dieser, eine hohe Steifigkeit aufweisenden Festigkeitsträger, können während des Fahrbetriebes auftretende Führungskräfte gerichtet aufgenommen werden, wodurch das Handling gegenüber bisher bekannten Laufstreifen wesentlich verbessert ist. Diese Verbesserung im Handling ist dadurch erreicht, dass insbesondere die Laufstreifenblöcke und -bänder durch die eingebrachten Festigkeitsträgerlagen anisotrop und definiert versteift sind und durch diese erhöhte Steifigkeit die Führungskräfte des Reifens während des Fahrbetriebes verbessert sind. Die Festigkeitsträgerlagen sind vorzugsweise durch den gesamten Profilblock von Profilblockseitenwand zur gegenüberliegenden Profilblockseitenwand angeordnet, entsprechendes gilt für das Profilband. Eine "Lage" bezeichnet ein flaches, sich in zwei aufeinander senkrecht stehenden Raumrichtungen erstreckendes, in etwa ebenes Gebilde.

Besonders vorteilhaft ist es, wenn die Laufstreifenkautschukmischung eine weiche Gummimischung ist. Im Zusammenspiel mit den Festigkeitsträgerlagen, die die Profilblöcke und/oder -bänder versteifen, ist eine Entkopplung von Laufstreifengummimischungshärte und Profilblock-/bandsteifigkeit erreicht. Durch die Wahl einer weichen Gummimischung ist die Nass- und Trockenbremsleistung verbessert. Denn eine weiche Gummimischung kann die Mikrorauhigkeit des Straßenbelages besser ausnutzen, als eine bislang zur Erreichung einer Steifigkeit für Führungskräfte notwendige härtere Gummimischung. Eine weiche Gummimischung für Sommerreifen weist eine Gummihärte kleiner als 65 Shore A, eine Gummimischung für Winterreifen eine Gummihärte kleiner als 60 Shore A auf.
Bisher war das Hauptproblem der Laufstreifengestaltung der Kompromiss zwischen Laufstreifenmischungshärte und Profilklotz-/ Bandsteifigkeit. Für optimale Nass- und Trockenbremsleistungen ist aus Sicht der Kontaktmechanik eine weiche Gummimischung von Vorteil. Auf der anderen Seite ist eine hohe Block-/Bandsteifigkeit erwünscht, um Umfangs- und Seitenführungskräfte gut zu übertragen und ein gutes Reifenhandling sicherzustellen. Für eine hohe Blocksteifigkeit war bisher aber eine hohe Laufstreifenmischungshärte erforderlich. Dieser Zielkonflikt ist nun gelöst. Trotz einer weichen Gummimischung ist durch die Anordnung von Festigkeitsträgerlagen im Laufstreifen die benötigte Block-/Bandsteifigkeit des Profils erreicht.

Insbesondere kommen Anordnungen von Festigkeitsträgerlagen in dem Laufstreifen in Betracht, bei der die Festigkeitsträgerlagen in etwa radial und in Umfangsrichtung angeordnet sind. Durch diese in Umfangsrichtung angeordnete Festigkeitsträgerlage innerhalb der Profilblöcke und/oder Profilbänder ist eine sehr hohe Blocksteifigkeit in Umfangsrichtung erreicht, mit der die Umfangskräfte gut aufgenommen werden können. Die Festigkeitsträger können radial oder in einem Winkel, der von der radialen Ausrichtung abweicht, angeordnet sein. Insbesondere können auch Festigkeitsträgerlagen eingebracht werden, deren Festigkeitsträger sich unter einem Winkel von etwa 90° kreuzen und deren Winkelhalbierende in etwa in radialer Richtung angeordnet ist. Durch sich kreuzende Festigkeitsträger aufweisende Festigkeitsträgerlagen ist die Blocksteifigkeit in Umfangsrichtung weiter erhöhbar.

In einer weiteren Ausführungsform, bei der die Festigkeitsträgerlagen in etwa radial quer zur Umfangsrichtung angeordnet sind, vorzugsweise in etwa 90° zur Umfangsrichtung, also lateral, ist eine Erhöhung der Block-, Bandsteifigkeit in lateraler Richtung erreichbar. Die einzelnen Festigkeitsträger dieser Lagen sind radial oder sich einander kreuzend angeordnet. Gerichtete Seitenführungskräfte können aufgenommen werden, wodurch das Handling verbesserbar ist.

In einer wiederum anderen Ausführungsform sind die Festigkeitsträgerlagen in einer von der lateralen und umfänglichen Richtung abweichenden Richtung radial angeordnet. Durch diese Anordnung ergibt sich die Möglichkeit, mit einer Festigkeitsträgerlage gleichzeitig die radiale- und die laterale Steifigkeit zu erhöhen.

In einem Laufstreifen können ebenfalls Kombinationen der drei vorbeschriebenen Festigkeitsträgerlagenanordnungen vorgesehen sein, insbesondere bezüglich des axial innen und des axial außen gelegenen Profilbereichs, an welche im Fahrbetrieb unterschiedliche Anforderungen gestellt sind. Bei laufrichtungsgebundenen Profilen werden vorzugsweise die fahrzeugaußen liegenden Profilblöcke verstärkt, da fahrzeugaußen liegende steife Blöcke das Reifenhandling verbessern.

Die in den vorgenannten Ausführungsformen benannten Festigkeitsträger der Festigkeitsträgerlagen erstrecken sich in radialer Richtung. Die Festigkeitsträger können auch von der radialen Ausrichtung abweichend schräg bis zu einem Winkel von 60° zur Radialrichtung innerhalb des Profilblockes und/oder innerhalb des Profilbandes angeordnet sein. Durch den Winkel zur Radialrichtung wird eine kraftrichtungsabhängige Anisotropie in die Profilbänder bzw. Profilblöcke geschaffen. Wenn die Festigkeitsträgerlagen von der radialen Anordnung abweichend in Verformungsrichtung des Profilblockes/ -bandes liegen, werden die Festigkeitsträger gedehnt, d.h. der Festigkeitsträger kann die Verformungskraft aufnehmen und den Profilblock bzw. das Profilband versteifen.
Wenn die Festigkeitsträgerlage entgegen der Verformungsrichtung innerhalb des Profilblockes oder -bandes angeordnet ist, werden die Festigkeitsträger gestaucht, d.h. der Festigkeitsträger kann keine Verformungskraft aufnehmen und den Profilblock bzw. das Profilband nicht versteifen.

Als weitere Ausführungsvariante können die Festigkeitsträger der vorbeschriebenen Ausführungsformen zueinander kreuzend angeordnet sein, wobei die Winkelhalbierende vorzugsweise in etwa in radialer Richtung angeordnet ist.

Vorteilhaft ist die Ausgestaltung eines Laufstreifens, bei der wenigstens zwei Festigkeitsträgerlagen innerhalb eines Profilblockes oder eines Profilbandes parallel zueinander angeordnet sind und wobei die Festigkeitsträgerlagen zur Vereinheitlichung der Steifigkeit des Profilblockes in der Nähe von Profilblockkanten angeordnet sind. Hierdurch ist erreicht, dass die Steifigkeit innerhalb eines gesamten Profilblockes in etwa vereinheitlicht ist, was sich ebenfalls positiv auf das Handling auswirkt.

Vorteilhaft ist es, wenn die Garne oder Korde aus Polymeren wie Aramiden, Polyestern, Polyamiden, Rayon, PEN, hochfeste Kohlenstoffasern, Baumwolle oder ähnlichen Materialien bestehen. Die optimale Haftung zwischen Kord und Gummimatrix auf der einen Seite und maximaler Modul für eine hohe Versteifungswirkung stellen einen Zielkonflikt dar, der durch einen Kompromiss zwischen beiden Eigenschaften gelöst werden muss. Anwendungsfallbezogen kann eine optimale Haftung zwischen Kord und Gummimatrix oder eine maximale Versteifungswirkung wichtig sein. Eine optimale Kord - Gummihaftung und mechanische Stabilität wird durch Baumwolle und Rayon erreicht. PEN, Kohlenstofffasern und Aramid stehen für hohen Modul und für die höchste Versteifungswirkung bei geringerer Kord - Gummihaftung. Polyester und Polyamide sind als geeignete Kompromisslösungen einsetzbar.

Als Festigkeitsträger können ebenfalls Drähte oder Hohlfasern zum Einsatz kommen.

Die Festigkeitsträger sind ausschließlich nur innerhalb des Laufstreifens angeordnet.

Ein weiterer Vorteil der vorliegenden Erfindung ist es, dass die Fahrgeräuschentwicklung am fahrenden Reifen verringert werden kann. Denn für die Fahrgeräuschentwicklung ist ein Profilblock gefordert, der eine weiche Gummimischung enthält. Die Festigkeitsträgerlagen sorgen trotz der niedrigen Gummihärte für eine hohe Profilsteifigkeit. Es ist eine Entkopplung der Profilblocksteifigkeit von der Gummihärte in Umfangsrichtung, Lateralrichtung und Radialrichtung je nach Anordnung der Festigkeitsträgerlagen im Laufstreifen ermöglicht. Für Geräusch und Komfort ist eine geringe Radialsteifigkeit der Blöcke unter Beibehaltung einer hohen Umfangssteifigkeit und Lateralsteifigkeit wünschenswert. Dieses ist durch eine entsprechende Anordnung der Festigkeitsträgerlagen erreichbar.

Die Festigkeitsträgerlagen können bei Winterreifen durch ihre Härte eine bessere Verzahnung der Blöcke/Bänder mit Eis und Schnee durch einen Spikeeffekt bewirken. Die Reifeneigenschaften auf Eis und Schnee werden verbessert.

Zu den in der Beschreibung verwendeten Begriffen wird darauf verwiesen, dass unter "Filament" ein Einzelfaden zu verstehen ist, unter dem Begriff "Garn" ein Strang bestehend aus einer Vielzahl von parallel zueinander verlaufenden Filamenten, welcher gegebenenfalls mit einem Schutzdrall versehen ist, und unter "Kord" eine Anzahl von Garnen, welche miteinander verdreht sind.

Weitere Merkmale, Vorteile und Einzelheiten der Erfindung werden nun anhand der Zeichnungen, die schematische Ausführungsbeispiels darstellen, näher erläutert. Es zeigen die:
- Fig. 1: eine dreidimensionale Darstellung eines Reifenausschnitts, insbesondere des Laufstreifens;
- Fig.2: einen Profilblock mit zwei Festigkeitsträgerlagen;
- Fig.3a - 3c: einen Profilblock mit Festigkeitsträgerlage, dessen Verformung beim Abbremsen (3b) und beim Beschleunigen (3c).

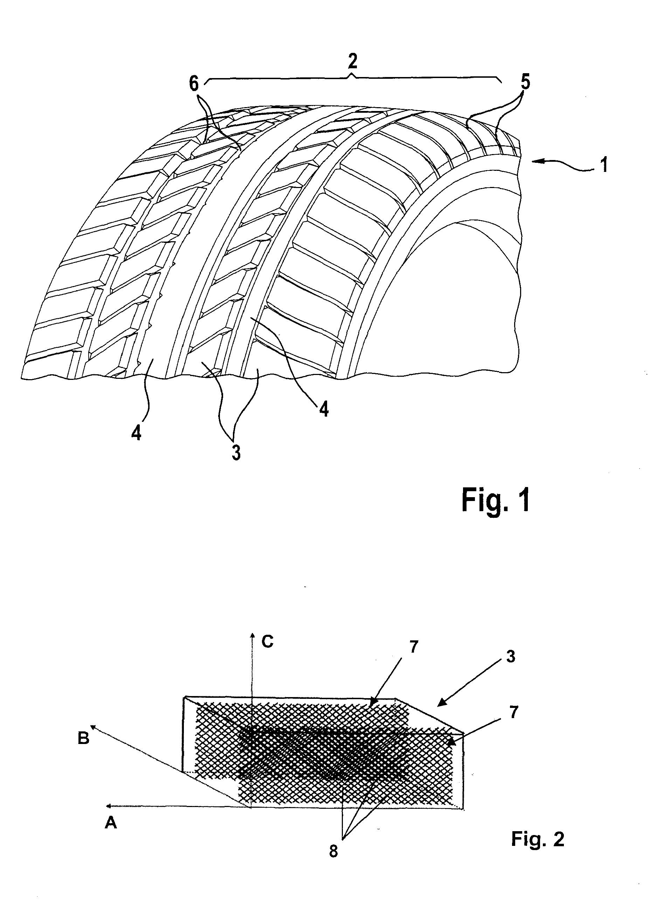

In der **Fig.1** ist eine dreidimensionale Darstellung eines bekannten Reifenausschnitts, insbesondere des Laufstreifens dargestellt. Der PKW-Luftreifen weist einen Laufstreifen 2 auf, der durch Querrillen 5 und Längsrillen 6 in eine Vielzahl von in Umfangsrichtung hintereinander angeordneten Profilblöcken 3 und in zwei in Umfangsrichtung umlaufende Laufstreifenbänder 4 unterteilt ist. Der Laufstreifen 2 besteht aus einer Gummimischung oder der Laufstreifen ist aus zwei oder mehr Gummimischungen, der Cap und Base aufgebaut. Die Wahl der Gummimischung und die Gestaltung des Profils bestimmt das Fahrverhalten des Reifens.
Schwierig war es bisher, einen Kompromiss zwischen Laufstreifenmischungshärte und Profilklotz-/ Bandsteifigkeit zu erreichen. Denn für optimale Nass- und Trockenbremsleistungen ist aus Sicht der Kontaktmechanik eine weiche Gummimischung von Vorteil. Auf der anderen Seite ist eine hohe Block-/Bandsteifigkeit erwünscht, um Umfangs- und Seitenführungskräfte gut übertragen zu können und ein gutes Reifenhandling sicherzustellen. Für eine hohe Blocksteifigkeit war bisher aber eine hohe Laufstreifenmischungshärte erforderlich.

Die vorliegende Erfindung löst nun diesen widersprüchlichen Konflikt. Trotz einer weichen Gummimischung ist durch die Anordnung von Festigkeitsträgerlagen im Laufstreifen die benötigte Klotz-/Bandsteifigkeit des Profils erreicht, wodurch die Umfangs- und Seitenführungskräfte trotz weicher Laufstreifengummimischung gut zu übertragen sind.

In der **Fig.2** ist ein Profilblock eines Laufstreifens 2 dargestellt. Der Profilblock weist zwei Festigkeitsträgerlagen 7 auf, die parallel zueinander in der Nähe von gegenüberliegenden Kanten des Profilblockes 3 angeordnet sind. Die Festigkeitsträgerlagen 7 sind in ihrer Längserstreckung in Umfangsrichtung A angeordnet, während sich die Lage 7 in radialer Richtung C erstreckt. Jede Festigkeitsträgerlage 7 weist gummierte Festigkeitsträger 8 auf. Die Festigkeitsträgerlage 7 wurde in der Mitte gefaltet, wodurch ein Kreuzverband mit hoher Steifigkeit entsteht, der den Profilblock 3 anisotrop versteift. Die Winkelhalbierenden der sich einander kreuzenden Korde weisen in etwa in radialer Richtung C. Diese Anordnung der Festigkeitsträgerlagen 7 in Umfangsrichtung A erhöht die Profilblocksteifigkeit, wodurch es ermöglicht ist, eine weiche Gummimischung für den Laufstreifen zu wählen. Durch die Kombination einer weichen Gummimischung und definiert, anisotrop im Profilblock 3 angeordneten Festigkeitsträgerlagen 7 ist erreicht, dass ein guter Reifen- /Fahrbahnkontakt durch die weiche Gummimischung, aber dennoch ein gutes Handlingverhalten durch die versteiften Profilblöcke erhalten ist.

In der **Fig. 3a** ist ein Längsschnitt durch einen Profilblock 3 eines drehrichtungsgebundenen Reifenlaufstreifens (nicht gezeigt) dargestellt, der mit einer quer zur Umfangsrichtung angeordneten Festigkeitsträgerlage 7 anisotrop verstärkt ist. Die Festigkeitsträgerlage 7 ist in einem von der radialen Ausrichtung C abweichenden Winkel α mit seiner der Fahrbahnoberfläche 9 zugewandten Seite entgegen der Fahrtrichtung (Pfeil) geneigt angeordnet. Durch diese von der radialen Ausrichtung C abweichende Anordnung der Festigkeitsträgerlage 7 ist eine kraftrichtungsabhängige Anisotropie in dem Profilblock 3 erreicht.

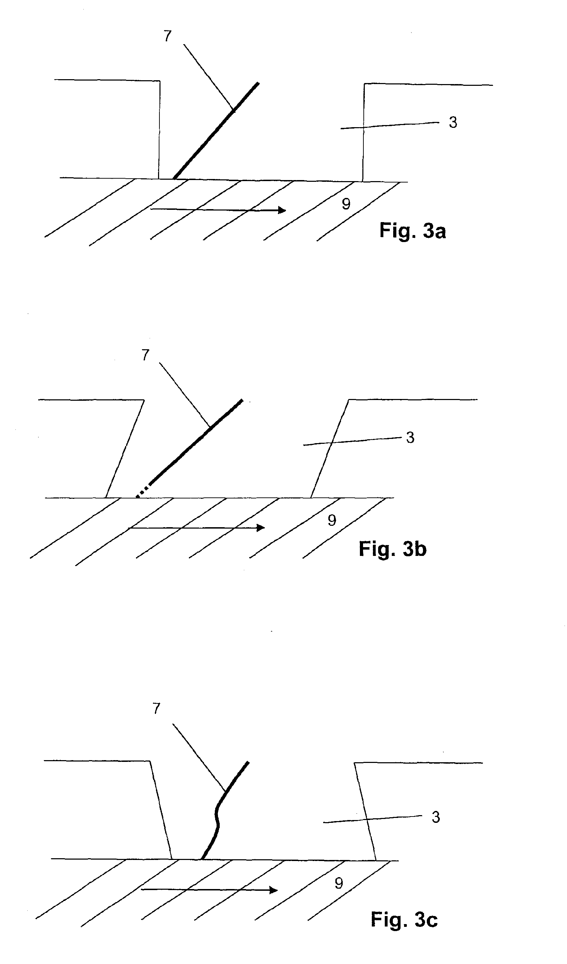

Die **Fig.3b** zeigt den durch Krafteinwirkung beim Abbremsen verformten Profilblock 3 der Fig.3a. Durch die Verformung des Blockes 3 beim Abbremsen gerät die Festigkeitsträgerlage 7 unter Zugkraft und der Profilblock 3 wird durch den Festigkeitsträger 7 versteift. Es hat sich gezeigt, dass beim Trockenbremsen steife Profilblöcke, -bänder von Vorteil sind. Die **Fig.3c** zeigt den Profilblock 3 der Fig.3a beim Beschleunigen. Die Festigkeitsträgerlage 7 ist mit ihrer der Fahrbahnoberfläche 9 zugewandten Seite entgegen der beim Beschleunigen wirkenden Kraft ausgerichtet. Die Festigkeitsträger 8 der Festigkeitsträgerlage 7 geraten unter Kompression und können keine Kraft aufnehmen. Der Profilblock 3 wird beim Beschleunigen nicht versteift. Es hat sich gezeigt, dass weiche Profilblöcke die Reifengeräuschentwicklung, insbesondere die Aufschlaggeräusche der Profilblöcke/bänder auf die Fahrbahnoberfläche während des Beschleunigens, reduzieren.

### Bezugszeichenliste

### (Teil der Beschreibung)

- 1: PKW-Luftreifen
- 2: Laufstreifen
- 3: Profilblock
- 4: Profilband
- 5: Querrille
- 6: Längsrille
- 7: Festigkeitsträgerlage
- 8: Festigkeitsträger
- 9: Fahrbahnoberfläche

- A: Umfangsrichtung
- B: Lateralrichtung
- C: Radialrichtung

## Patentansprüche

1. Laufstreifen für einen Fahrzeugreifen, wobei der Laufstreifen (2) aus einer Kautschukmischung besteht, welcher durch Längs (6)- und/oder Querrillen (5) in Profilblöcke (3) und/oder Profilbänder (4) untergliedert ist, wobei der Laufstreifen (2) Einkerbungen aufweist, die mit einem Material verfüllt sind, das von der Laufstreifenkautschukmischung unterschiedliche Eigenschaften aufweist,
**dadurch gekennzeichnet,**
**dass** das von der Laufstreifenkautschukmischung unterschiedliche Eigenschaften aufweisende Material eine Festigkeitsträger (8) enthaltende Lage (7) ist,
wobei die Festigkeitsträgerlage (7) aus parallel zueinander angeordneten gummierten Korden oder Garnen als Festigkeitsträger (8) besteht,
**dass** die Festigkeitsträger (8) einen höheren Modul als die Laufstreifenkautschukmischung aufweisen und derart im Laufstreifen (2) angeordnet sind, dass die Profilblock- und/oder die Profilbandsteifigkeit definiert und anisotrop erhöhbar ist.

2. Laufstreifen nach Anspruch 1,
**dadurch gekennzeichnet,**
**dass** die Laufstreifenkautschukmischung eine weiche Gummimischung ist.

3. Laufstreifen nach Anspruch 2,
**dadurch gekennzeichnet,**
**dass** eine weiche Gummimischung für Sommerreifen eine Gummihärte kleiner als 65 Shore A, vorzugsweise 45-55 Shore A, aufweist und
**dass** eine weiche Gummimischung für Winterreifen eine Gummihärte kleiner als 60 Shore A, vorzugsweise 35 - 50 Shore A, aufweist.

4. Laufstreifen nach einem der vorangehenden Ansprüche,
**dadurch gekennzeichnet,**
**dass** die Festigkeitsträger (8) einer Lage (7) parallel zueinander oder einander unter einem Winkel von vorzugsweise 45° kreuzend angeordnet sind.

5. Laufstreifen nach einem der vorangehenden Ansprüche,
**dadurch gekennzeichnet,**
**dass** wenigstens zwei Festigkeitsträgerlagen (7) innerhalb eines Profilblockes (3) oder eines Profilbandes (4) parallel zueinander angeordnet sind,
wobei die Festigkeitsträgerlagen (7) zur Vereinheitlichung der Steifigkeit des Profilblockes (3) in der Nähe von Profilblockkanten angeordnet sind.

6. Laufstreifen nach einem der vorangehenden Ansprüche,
**dadurch gekennzeichnet,**
**dass** die Festigkeitsträgerlagen (7) in etwa radial in Umfangsrichtung (A) angeordnet sind.

7. Laufstreifen nach einem der Ansprüche 1-5,
**dadurch gekennzeichnet,**
**dass** die Festigkeitsträgerlagen (7) in etwa radial quer zur Umfangsrichtung (A) angeordnet sind, vorzugsweise in einem Winkel von etwa 90° zur Umfangsrichtung (A).

8. Laufstreifen nach einem der Ansprüche 1-5,
**dadurch gekennzeichnet,**
**dass** die Festigkeitsträgerlagen (7) radial angeordnet sind und in jeden beliebigen Winkel zwischen radial in Umfangsrichtung und radial quer zur Umfangsrichtung angeordnet sind.

9. Laufstreifen nach einem der vorangehenden Ansprüche,
**dadurch gekennzeichnet,**
**dass** die Festigkeitsträgerlagen (7) radial oder schräg bis zu einem Winkel von 60° zur Radialrichtung (C) innerhalb des Profilblockes (3) und/oder innerhalb des Profilbandes (4) angeordnet sind.

10. Laufstreifen nach einem der vorangehenden Ansprüche,
**dadurch gekennzeichnet,**
**dass** die Festigkeitsträger (8) Garne oder Korde oder Hohlfasern aus Polymeren wie Polyamiden, Polyestern, Aramiden, Rayon, PEN, hochfeste Kohlenstoffasern oder Baumwolle sind.

11. Fahrzeugreifen,
**dadurch gekennzeichnet,**
**dass** dieser einen Laufstreifen (2) nach zumindest einem der vorangehenden Ansprüche aufweist.
